(19) Europäisches Patentamt / European Patent Office / Office européen des brevets

(11) **EP 3 034 394 B1**

(12) **FASCICULE DE BREVET EUROPEEN**

(45) Date de publication et mention
de la délivrance du brevet:
**22.03.2017   Bulletin 2017/12**

(51) Int Cl.:
***B64C 13/00*** *(2006.01)*     ***B64C 13/04*** *(2006.01)*

(21) Numéro de dépôt: **15196053.1**

(22) Date de dépôt: **24.11.2015**

(54) **PROCEDE DE GESTION DE DISCONTINUITES DANS UNE COMMANDE DE VEHICULE SUITE A UNE TRANSITION DE COMMANDE, ET VEHICULE**

VERFAHREN ZUR HANDHABUNG VON DISKONTINUITÄTEN IN EINER FAHRZEUGSTEUERUNG INFOLGE EINER UMSCHALTUNG DER STEUERUNG, UND ENTSPRECHENDES FAHRZEUG

A METHOD OF MANAGING DISCONTINUITIES IN VEHICLE CONTROL FOLLOWING A CONTROL TRANSITION, AND A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **18.12.2014   FR 1402912**

(43) Date de publication de la demande:
**22.06.2016   Bulletin 2016/25**

(73) Titulaire: **Airbus Helicopters**
**13725 Marignane Cedex (FR)**

(72) Inventeurs:
• **VALLART, Jean-Baptiste**
**13100 AIX EN PROVENCE (FR)**
• **BYZERY, Roméo**
**13003 MARSEILLE (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**EP-A1- 0 718 731     US-A1- 2007 164 167**
**US-A1- 2013 261 853**

## Description

La présente invention concerne un procédé de gestion de discontinuités dans une commande de véhicule suite à une transition de commande, et un véhicule appliquant ce procédé.

L'invention se situe en particulier dans le domaine des lois de pilotage et plus particulièrement des dispositifs gérant des discontinuités de commande suite à un changement de lois de pilotage ou au sein d'une même loi. L'invention trouve particulièrement son intérêt pour des systèmes à commandes de vol électriques ou optiques avec des organes de pilotage centrés.

La présente invention se situe donc en particulier dans le domaine technique des commandes électriques ou optiques contrôlant le déplacement d'un véhicule, et notamment des commandes de vol électriques ou optiques d'un aéronef.

Un aéronef comporte usuellement des organes de direction pouvant être contrôlés pour diriger cet aéronef. Ces organes de direction peuvent par exemple comprendre des surfaces aérodynamiques ou encore des organes expulsant un fluide en dehors de l'aéronef.

Dans ce contexte, un giravion est muni d'un rotor principal qui assure la propulsion et la sustentation du giravion. Le pas des pales de ce rotor principal peut être ajusté de manière cyclique ou collective pour diriger l'aéronef dans l'espace.

De plus, un giravion peut comporter un organe dit « organe auxiliaire » par commodité pour contrôler le mouvement en lacet de ce giravion. Un tel organe auxiliaire peut comprendre par exemple soit un rotor arrière soit un dispositif expulsant un fluide latéralement.

Pour contrôler ces organes de direction, l'aéronef peut comprendre des commandes pouvant être manoeuvrées par un pilote, une telle commande étant dénommée par commodité « commande pilote ».

Les commandes pilotes sont reliées de manière mécanique et/ou non mécanique à des actionneurs manoeuvrant les organes de direction. Des commandes pilotes non mécaniques peuvent comprendre des commandes électriques ou optiques.

Dans le cadre d'une commande non mécanique, une commande pilote peut générer un signal transmis à un système de traitement. Un tel système de traitement peut comprendre une unité de traitement dénommée « Primary Flight Control System » en langue anglaise. Ce système de traitement élabore ensuite un ordre à l'aide d'une loi de pilotage sur la base dudit signal, cet ordre permettant de contrôler au moins un actionneur agissant directement ou indirectement sur au moins un organe de direction. Une telle commande pilote est dénommée plus simplement « commande électrique ou optique ».

Une commande électrique ou optique peut comprendre un mini-manche dit « joystick » en langue anglaise, un levier, un palonnier...

Le signal électrique ou optique transmis par une commande électrique ou optique peut représenter la position de cette commande électrique ou optique dans l'espace. L'unité de traitement introduit alors cette position dans une loi de pilotage pour déterminer les ordres à transmettre à un ou plusieurs actionneurs.

Par ailleurs, la commande électrique ou optique ne contrôle pas nécessairement un paramètre d'un dispositif de direction, tel que le pas des pales d'un rotor principal par exemple. Cette commande électrique ou optique peut définir un objectif à atteindre en manoeuvrant les différents organes de direction. A titre d'exemple, la commande électrique ou optique peut être manoeuvrée pour spécifier une vitesse de consigne de l'aéronef à atteindre, le système de traitement élaborant alors les ordres à transmettre aux organes de direction pour atteindre cette vitesse de consigne.

Ainsi, l'unité de traitement génère à l'aide d'une loi de pilotage un ordre pouvant être dénommé « ordre indirect » dans la mesure où cet ordre n'est pas transmis directement à un actionneur. L'ordre indirect est alors transmis à une unité de pilotage qui élabore alors un ordre pouvant être dénommé « ordre direct », cet ordre direct étant ensuite transmis à au moins un actionneur.

Pour des raisons d'opérabilité du véhicule, l'unité de traitement peut comprendre une pluralité de lois de pilotage différentes. Les lois de pilotage peuvent changer notamment en fonction de la phase de vol, ou encore en fonction du mode de pilotage choisi par un pilote par exemple.

Par exemple, l'unité de traitement peut appliquer durant une phase de vol à basse vitesse une loi de pilotage générant un ordre indirect spécifiant une vitesse sol longitudinale à atteindre. Par contre, l'unité de traitement peut appliquer durant une phase de vol à haute vitesse une loi de pilotage générant un ordre indirect spécifiant une vitesse air indiquée à atteindre

Le passage d'une loi de pilotage à une autre loi de pilotage peut alors générer une discontinuité dans les commandes.

En effet, la commutation entre deux lois de pilotage peut être automatique pour réduire la charge de travail des équipages. De plus, deux lois distinctes ne produisent pas nécessairement la même consigne à destination d'actionneurs pour une même position d'une commande électrique.

Par suite, un pilote peut positionner une commande électrique ou optique dans une position donnée. Pour cette position une première loi de pilotage génère au moins un premier ordre transmis à au moins un organe de direction. Or, les deux lois ne produisent pas nécessairement le même ordre, pour la même position de commande électrique ou optique.

Ainsi, lorsque la commande électrique est dans cette position donnée, la deuxième loi peut générer au moins un deuxième ordre différent du premier ordre. Une commutation franche entre la première loi et la deuxième loi peut donc produire un à-coup sur les commandes dénommé « discontinuité de commande » ou plus simplement « discontinuité ». Cette discontinuité est dommageable à la fois pour la trajectoire du véhicule, le confort de l'équipage et des éventuels passagers, et la tenue mécanique des organes de direction commandés.

La commutation entre deux lois de pilotage n'est pas la seule source de discontinuité. Certaines actions du pilote peuvent aussi entraîner des discontinuités.

Par exemple, un mini-manche peut être déplacé autour d'une position neutre dans laquelle le mini-manche donne un ordre de référence. Un pilote a la possibilité de modifier cet ordre de référence. Ainsi, ce pilote peut déplacer le mini-manche dans une position défléchie. A l'aide d'un bouton de sélection, ce pilote peut spécifier que l'ordre transmis par le mini-manche corresponde désormais à l'ordre de référence fourni lorsque le mini-manche se trouve dans sa position neutre.

Or, le mini-manche se trouve toujours dans sa position défléchie ce qui conduit à une discontinuité.

Pour résoudre ce problème, l'opération de modification de la référence du mini-manche peut être réalisée non pas en basculant le mini-manche mais en utilisant une interface dédiée à cette opération. Le pilote modifie alors l'ordre de référence à l'aide de cette interface en maintenant le mini-manche dans la position neutre pour éviter une discontinuité.

La problématique des discontinuités englobe également les transitions entre différents calculateurs d'une même architecture, par exemple sur cas de panne ou bien encore les transitions entre deux modes distincts de pilotage, par exemple sur cas de défaillance d'un senseur primaire.

Par suite, l'expression « transition de commande » fait référence à la transition entre deux lois de pilotage, ou encore à la transition entre deux références d'une commande de pilote. Par conséquent, une transition de commande peut générer une discontinuité dans les commandes d'un véhicule.

Plusieurs solutions existent pour limiter l'impact d'une discontinuité de commande.

La première solution consiste à temporiser le passage d'une loi de pilotage à une autre loi de pilotage par exemple, en limitant la vitesse d'exécution d'un ordre élaboré par les lois de pilotage. Cette limitation permet de limiter l'effet d'une discontinuité.

En effet et selon l'exemple précédent, le passage du premier ordre résultant de l'application d'une première loi de pilotage vers un deuxième ordre résultant par exemple de l'application d'une deuxième loi de pilotage s'effectue progressivement à une vitesse limitée. Cette première solution permet de réduire les à-coups résultant de la discontinuité en ralentissant la transition entre deux ordres de commandes successifs différents.

Néanmoins, cette première solution tend à limiter la vitesse d'exécution des ordres donnés, même en l'absence d'une discontinuité. L'homme du métier se retrouve donc à arbitrer un compromis entre le comportement dynamique des lois de pilotage et la dureté de l'à-coup subi suite à la commutation entre deux lois de pilotage.

Si l'homme du métier souhaite avoir des discontinuités très bien lissées, les limitations en vitesse vont être réglées sur des vitesses de commande très basses qui pénalisent la réactivité de la loi de pilotage. Si à l'inverse la réactivité de la loi de pilotage est optimisée, alors ces limitations en vitesse seront réglées sur des vitesses de commande hautes qui induisent un effet limité sur le lissage des discontinuités.

La seconde solution consiste à utiliser un composant logiciel appelé « fader »

Contrairement à la première solution, ce composant applique une limitation en vitesse uniquement sur une différence entre les ordres provenant de deux lois de pilotage différentes au moment d'une commutation entre ces deux lois de pilotage.

La deuxième solution permet de s'affranchir d'un inconvénient de la première solution. En effet, en l'absence de commutation, cette deuxième solution n'agit pas sur la loi de pilotage mise en oeuvre.

A l'instar de la première solution, la deuxième solution permet de temporiser la commutation entre deux lois de pilotage. Si cette temporisation est brève, la commutation peut générer un à-coup dans les commandes. Par contre, si la temporisation est trop longue, le contrôle de l'aéronef peut être dégradé.

Une troisième solution consiste à établir une loi de pilotage de transition sur une plage de transition. Par exemple dans une plage de vitesses, une loi de pilotage de transition résulte d'une interpolation linéaire de deux lois de pilotage en fonction d'une vitesse de l'aéronef.

Sur toute la plage de transition, le pilote n'a cependant pas le contrôle d'une grandeur physique réelle. La pilotabilité de la loi de transition s'en trouve dégradée. Pour minimiser cet inconvénient, la plage de transition est réduite à son minimum, ce qui limite d'autant les bénéfices attendus d'une telle méthode.

Une quatrième solution consiste à faire converger deux lois différentes vers des ordres de commandes similaires pour limiter la discontinuité de commande, et donc ses impacts à bord du véhicule. Bien qu'efficace, le comportement de l'aéronef au moment de la transition peut être difficile à appréhender.

L'arrière plan technologique comporte les documents US 8729848, US 5197697, US 8050780 et US 8725321.

Le document US 8729848 présente un mini-manche coopérant avec un système à retour d'effort passif.

Le document US5197697 présente un système permettant à un pilote de manoeuvrer une commande pour modifier un ordre de commande d'un système de pilotage automatique.

Le document US8050780 décrit un système à retour d'efforts dans un manche. Un signal de position et un signal d'effort sont utilisés dans une boucle de retour d'effort pour contrôler un moteur mécaniquement connecté au manche.

Le document US8725321 présente une commande pilote reliée mécaniquement à un segment d'un organe de direction. De plus, un capteur d'effort mesure l'effort exercé par une pilote sur la commande pilote. Ce capteur d'effort envoie un signal d'effort à une unité de traitement qui contrôle un actionneur relié à un autre segment de l'organe de direction en fonction notamment dudit signal d'effort.

Les documents EP 0718 731, US 2013/261583 et US 2007/164167 sont aussi connus.

Le document EP 0718731 décrit un dispositif pour l'actionnement d'un organe commandé d'un aéronef. Ce dispositif comporte un calculateur relié à des moyens d'actionnement aptes à actionner un organe commandé en fonction de l'action d'un pilote sur un organe de commande.

La présente invention a alors pour objet de proposer un procédé tendant à éviter des discontinuités dans une commande suite à une transition de commande, cette transition pouvant résulter du passage d'une loi de pilotage à une autre loi de pilotage ou encore d'une modification d'une référence d'un organe de commande.

L'invention concerne donc un procédé pour commander un actionneur agissant sur un organe de direction d'un véhicule, cet actionneur étant commandé par une commande pilote manoeuvrable par un individu en appliquant une pluralité de lois de pilotage, chaque loi de pilotage déterminant un objectif à atteindre pour commander l'actionneur en fonction d'au moins une variable de position relative à une position de ladite commande pilote par rapport à une position neutre,

Ce procédé comporte les étapes suivantes :

- détermination d'une position courante de la commande pilote, l'actionneur étant commandé en affectant la position courante à ladite au moins une variable de position d'une première loi de pilotage,

- détermination d'au moins une position équivalente que la commande pilote doit atteindre suite à une transition de commande pour ne pas modifier l'actionneur,

- détermination d'au moins un écart entre la position équivalente et la position courante,

- détermination de la présence de ladite transition de commande,

- à partir de la transition de commande, détermination d'un objectif pour commander l'actionneur en appliquant une loi de pilotage après transition, cet objectif étant déterminé en affectant une valeur dite « valeur corrigée » à au moins une dite variable de position dans ladite loi de pilotage après transition, la valeur corrigée étant déterminée en fonction de la position courante de la commande pilote et d'un dit écart,

- détermination d'un déplacement de ladite commande pilote,

- tant que ledit écart est non nul, réduction dudit écart proportionnellement audit déplacement lorsque ladite commande pilote est rapprochée de ladite position équivalente.

L'expression « en affectant la position courante à ladite au moins une variable de position d'une première loi de pilotage » signifie que la position courante est repérée par au moins un paramètre de position, la valeur de ce paramètre de position étant affectée à la variable de position de la première loi de pilotage. Par exemple, un angle de rotation de la commande pilote est mesuré, cet angle étant introduit dans la première loi de pilotage.

Un écart représente alors une différence entre deux valeurs distinctes d'un paramètre de position.

Par ailleurs, un actionneur peut comprendre une portion structurelle pouvant être étirée, rétractée, défléchie voire mise en rotation par exemple. L'expression « pour ne pas modifier l'actionneur » signifie que l'actionneur reste dans une forme donnée, ladite portion n'étant alors pas étirée, rétractée, défléchie voire mise en rotation par exemple.

L'invention propose ainsi de traiter une discontinuité de commande en fonction de l'action d'un pilote sur une commande pilote, et non d'un critère temporel.

La commande pilote peut être n'importe quel organe de pilotage d'un véhicule. Par exemple, une commande pilote peut être un palonnier, un manche de commande de pas cyclique d'un giravion, un levier de commande de pas collectif d'un giravion, une manette des gaz d'un moteur, une manette de commande d'une gouverne, une manette de commande d'ailerons sur un avion.

Cette commande pilote peut être déplacée par un pilote pour établir un objectif en appliquant une loi de pilotage.

Par exemple, un palonnier peut piloter une variable de position d'une loi de pilotage.

Par ailleurs, un mini-manche peut être déplacé dans un volume conique. La position du mini-manche dans le volume conique peut être déterminée à l'aide de deux paramètres de position. Un tel mini-manche peut alors piloter deux variables de position par exemple, respectivement de deux lois de pilotage distinctes ou d'une même loi de pilotage. En particulier, cette position courante peut être déterminée en identifiant deux angles par rapport à deux axes de rotation.

Par conséquent, selon ce procédé, la position courante de la commande pilote est déterminée. Cette position courante d'une commande pilote permet de piloter une ou plusieurs variables de position d'une première loi de pilotage. La première loi de pilotage génère alors un objectif permettant de contrôler au moins un actionneur agissant sur un organe de direction.

Cet objectif est transmis directement à chaque actionneur concerné, ou indirectement par une unité de pilotage déterminant l'ordre à transmettre à chaque actionneur pour atteindre cet objectif.

En effet, selon une variante, l'objectif est un ordre transmis à un actionneur. Eventuellement, cet ordre peut néanmoins transiter par une unité de pilotage sans pour autant être modifié par cette unité de pilotage.

Néanmoins, selon une autre variante, l'objectif est transmis à une unité de pilotage, cette unité de pilotage appliquant au moins une loi de pilotage pour transformer l'objectif au moins en un signal de commande transmis à un actionneur.

En parallèle, une position équivalente à atteindre suite à une transition de commande est déterminée.

Pour mémoire, une transition de commande induit une modification de l'objectif transmis à un actionneur en l'absence de déplacement d'une commande pilote. Par exemple, un mini-manche figé dans une position donnée induit deux objectifs différents respectivement avant et à partir de la transition. On verra par la suite que la transition de commande peut être provoquée par une modification de la loi de pilotage applicable ou encore par une modification de la valeur d'une variable de référence d'une loi de pilotage.

Par suite, le procédé propose d'élaborer la position dite « position équivalente » de la commande pilote qui donnerait au moment de la transition de commande un objectif n'ayant aucune influence sur l'actionneur contrôlé. Autrement dit, la position courante avant la transition de commande et la position équivalente suite à la transition de commande induisent la génération du même ordre transmis à au moins un actionneur.

Dès lors, on détermine au moins un écart entre la position courante et la position équivalente.

Par exemple, un mini-manche permet d'ajuster la valeur de deux variables de position. Deux écarts relatifs respectivement aux deux variables de position sont alors éventuellement déterminés.

Selon le procédé, le fonctionnement du véhicule est en permanence surveillé pour déterminer si une transition de commande doit se produire. On entend par « détermination de la présence de ladite transition de commande » une étape consistant à déterminer si une transition doit intervenir. Dans l'affirmative, la transition est opérée en appliquant le procédé décrit.

Dès lors et toujours dans l'affirmative, au moment de la transition de commande, chaque écart est utilisé en plus de la variable de position correspondante pour déterminer une valeur corrigée injectée dans la loi de pilotage adéquate.

Ainsi, la commande pilote se trouve dans une position courante ajustant au moins une variable de position. La valeur de cette variable de position est corrigée en utilisant l'écart déterminée précédemment.

Par exemple, au moins un écart est égal à une différence entre ladite position équivalente et ladite position courante. La valeur corrigée est alors égale à la somme de ladite position courante de ladite commande pilote et dudit écart.

Alternativement, au moins un écart est égal à une différence entre ladite position courante et ladite position équivalente, ladite valeur corrigée étant égale à la différence de ladite position courante de ladite commande pilote et dudit écart.

A la transition, la commande pilote induit ainsi la création d'une consigne transmise à un actionneur égale à la consigne transmise avant la transition. Ce procédé permet donc d'éviter une discontinuité de commande.

Par exemple, un angle de basculement de la commande pilote est mesurée. Chaque loi de pilotage détermine une consigne transmise à un actionneur en fonction de cet angle. Par exemple, selon une première loi de pilotage la consigne est alors égale au produit d'une première constante et dudit angle.

Une transition de commande peut conduire à appliquer une deuxième loi de pilotage selon laquelle la consigne est égale au produit d'une deuxième constante et dudit angle.

A chaque instant de calcul, on détermine un écart angulaire afin que la consigne soit identique en appliquant la première loi de pilotage et la deuxième loi de pilotage.

Une seule loi de pilotage est néanmoins active à chaque instant pour commander un actionneur.

Ainsi, avant la transition de commande, seule la première loi de pilotage est utilisée pour commander un actionneur, l'angle injecté dans la première loi de pilotage correspondant à l'angle courant de la commande pilote.

Par contre au moment de la transition de commande, seule la deuxième loi de pilotage est utilisée pour commander l'actionneur, l'angle injecté dans cette deuxième loi de pilotage correspondant à la somme de l'angle courant de la commande pilote et dudit écart.

Cet écart est toutefois éliminé progressivement par la suite en fonction de l'action du pilote sur la commande pilote. Tant que le pilote ne déplace pas la commande pilote, ni la position courante ni l'écart n'évoluent ce qui implique que l'ordre donné à au moins un actionneur est constant.

Si le pilote éloigne la commande pilote de la position équivalente, alors la deuxième loi de pilotage interprète normalement le changement de consigne et modifie l'ordre donné à au moins un actionneur. L'écart n'est pas modifié.

Si le pilote rapproche la commande pilote de la position équivalente alors l'écart est diminué en proportion et l'ordre donné à au moins un actionneur est inchangé.

Le rapprochement de la commande pilote de la position équivalente peut être déterminé par des méthodes usuelles. Par exemple, la somme de la valeur d'un paramètre représentant la position courante et de la valeur de ce paramètre pour la position théorique est surveillée. Si cette somme diminue d'une certaine quantité, alors la commande pilote se rapproche de la position équivalente. Dès lors, l'écart est par exemple réduit de cette même quantité.

Ce procédé n'a rien d'évident en raison notamment de cette procédure. En effet, tant que l'écart n'est pas nul, un rapprochement de la commande pilote vers une position équivalente n'a pas d'effet sur les actionneurs et donc sur le comportement du véhicule.

Cette caractéristique peut paraître surprenante. Néanmoins, la demanderesse note que les lois de pilotage, les écarts et les amplitudes de déplacement d'une commande pilote sont tels que ce fonctionnement non linéaire de la commande pilote peut être peu gênant pour un pilote au regard des avantages offert par l'invention, voire peu perceptible par un pilote. En particulier, les écarts de sensibilité de commande entre les différents types de loi sur un axe donné sont raisonnables.

De même, la position théorique peut être relativement proche de butées de commande ce qui pourrait décontenancer un pilote. Toutefois, les lois de pilotage, les écarts et les amplitudes de déplacement d'une commande pilote sont tels que ce fonctionnement peut être peu gênant pour un pilote. Un constructeur peut notamment établir les lois de pilotage et leurs conditions d'application pour éviter qu'une position équivalente soit en dehors du domaine de fonctionnement d'un actionneur par exemple.

Ainsi, en allant à l'encontre de préjugés, l'invention propose un procédé tendant à optimiser les transitions de commande lors de la manoeuvre d'une commande pilote par un individu.

En particulier, le véhicule applique à tout moment une loi de pilotage, et non pas une éventuelle loi hybride pouvant être difficile à piloter.

De plus, la mise en place d'un écart entre une position courante et une position équivalente tend à permettre à un pilote de bien situer la position courante de la commande pilote dans le cadre de la loi de pilotage appliquée après la transition.

Par ailleurs, l'invention permet d'utiliser les modes de fonctionnement usuels durant une phase de pilotage entièrement automatique durant laquelle un équipage n'agit pas sur des commandes pilotes.

Ce procédé peut de plus comporter une ou plusieurs des caractéristiques additionnelles qui suivent.

Selon un premier mode de réalisation, la transition de commande correspond à la transition entre la première loi de pilotage et une deuxième loi de pilotage, la première loi de pilotage étant appliquée avant la transition de commande, la deuxième loi de pilotage étant la loi dite « loi de pilotage après transition » qui est appliquée à partir de la transition de commande.

Selon ce premier mode de réalisation, le véhicule est susceptible de mettre en oeuvre une pluralité de lois de pilotage. Par suite, une transition de commande se produit lors du passage d'une loi de pilotage à une autre loi de pilotage.

Par exemple, le véhicule étant un aéronef, on peut déterminer la présence d'une transition de commande en déterminant une phase de vol courante de l'aéronef, la première loi de pilotage étant appliquée durant une première phase de vol, la deuxième loi de pilotage étant appliquée durant une deuxième phase de vol distincte de la première phase de vol.

En fait, un constructeur peut déterminer une pluralité de phases de vol distinctes, chaque phase de vol étant associée à au moins une loi de pilotage.

En particulier, l'expression « phase de vol » peut couvrir des phases d'évolution d'un véhicule au sol. A titre non limitatif, les phases de vol peuvent aussi comprendre au moins une phase de vol se produisant lorsqu'au moins une partie d'un atterrisseur est en contact avec le sol, et au moins une phase de vol se produisant lorsqu'un atterrisseur n'est pas en contact avec le sol. En particulier, les phases de vol peuvent comprendre une phase de vol hors sol en vol stationnaire, une phase de vol hors sol à basse vitesse et une phase de vol hors sol à grande vitesse.

Ces différentes phases de vol peuvent être identifiées à l'aide d'au moins un capteur d'effort agencé sur un atterrisseur et d'au moins un moyen de mesure de la vitesse d'avancement d'un aéronef.

On peut aussi déterminer une transition de commande en surveillant une unité de sélection qui permet de déterminer la loi de pilotage à appliquer.

Par exemple, le véhicule peut comprendre un bouton, une commande vocale, une commande tactile ou équivalente permettant à un pilote de choisir la loi de pilotage à appliquer.

Pour déterminer la position équivalente d'une commande pilote, on détermine la position théorique que doit atteindre ladite commande pilote pour transmettre un objectif en appliquant ladite deuxième loi de pilotage identique à un objectif généré en appliquant ladite première loi de pilotage lorsque ladite commande pilote est dans ladite position courante.

Selon une première alternative du premier mode de réalisation, la première loi de pilotage et ladite deuxième loi de pilotage générant un objectif relatif à un même paramètre, pour déterminer ladite position équivalente, on réalise les étapes suivantes :

- détermination d'un objectif courant en affectant ladite position courante à au moins une variable de position de ladite première loi de pilotage,

- détermination d'une position théorique que doit atteindre ladite commande pilote pour générer ledit objectif courant en affectant ladite position théorique à au moins une variable de position de ladite deuxième loi de pilotage, ladite position équivalente étant égale à ladite position théorique.

Dès lors, durant une première phase, la première loi de pilotage est appliquée en y introduisant la valeur d'au moins une variable de position, la valeur de cette variable de position étant déterminée par la position courante de la commande pilote. La première loi de pilotage génère alors un objectif courant utilisé pour commander au moins un actionneur.

Durant une deuxième phase, la deuxième loi de pilotage est appliquée en y introduisant ledit objectif courant. La deuxième loi de pilotage permet alors de déterminer une position théorique de la commande pilote permettant d'atteindre ledit objectif courant.

Selon une deuxième alternative du premier mode de réalisation, chaque loi de pilotage étant fonction d'au moins une variable de position et d'une variable de référence correspondant à ladite position neutre, ladite première loi de pilotage générant un premier objectif relatif à un premier paramètre et ladite deuxième loi de pilotage générant un deuxième objectif relatif à un deuxième paramètre différent dudit premier paramètre, pour déterminer ladite position équivalente :

- on détermine la deuxième valeur du deuxième paramètre à atteindre au moment de ladite transition de commande dite « valeur de correspondance »,

- on affecte à ladite variable de référence ladite valeur de correspondance, ladite position neutre représentant ladite position équivalente.

Par exemple, la première loi de pilotage détermine un objectif de vitesse sol, la deuxième loi de pilotage déterminant un objectif de vitesse air indiquée dite « indicated air speed » en langue anglaise. Une logique de commutation basée entre autres sur les vitesses sol et air du véhicule organise la commutation entre les deux lois de pilotage.

Avant la transition d'une loi vers l'autre, des références équivalentes sont calculées.

Par exemple, avant la transition de la première loi de pilotage de la vitesse sol vers la deuxième loi de pilotage de la vitesse air indiquée, on détermine la valeur dite « valeur de correspondance » du deuxième paramètre à savoir de la vitesse air indiquée courante.

La valeur de correspondance peut être mesurée, calculée ou estimée. Eventuellement et selon l'exemple précédent, la valeur de correspondance peut être estimée en réalisant la somme de la vitesse sol de référence avant de la transition et d'une estimation de la vitesse du vent dans l'axe longitudinal du véhicule.

Cette valeur de correspondance est alors affectée à la position neutre de la commande pilote pour l'application de la deuxième loi de pilotage. Par suite, si la commande pilote n'est pas manoeuvrée, l'application de la deuxième loi de pilotage induit la génération d'un objectif de vitesse air indiquée atteignant la valeur de correspondance.

Cette position neutre représente aussi la position équivalente à partir de laquelle un écart avec la position courante est déterminé.

Selon une troisième alternative du premier mode de réalisation, chaque loi de pilotage étant fonction d'au moins une variable de position et d'une variable de référence correspondant à ladite position neutre, ladite première loi de pilotage générant un premier objectif relatif à un premier paramètre et ladite deuxième loi de pilotage générant un deuxième objectif relatif à un deuxième paramètre différent dudit premier paramètre, pour déterminer ladite position équivalente :

- on détermine la deuxième valeur du deuxième paramètre à atteindre au moment de ladite transition de commande dite « valeur de correspondance »,

- on pondère la valeur de correspondance pour déterminer une valeur pondérée selon un facteur de pondération donné, la valeur pondérée étant égale au produit de la valeur de correspondance et du facteur de pondération,

- on détermine ladite position équivalente que ladite commande pilote doit atteindre suite à la transition de commande pour ne pas générer une discontinuité en affectant à ladite variable de référence ladite valeur pondérée dans ladite deuxième loi de pilotage, puis on détermine un écart entre la position équivalente et la position courante.

Au moment de la transition, la deuxième loi de pilotage est appliquée en affectant à la variable de référence la valeur pondérée, et en affectant une valeur corrigée à la variable de position, ladite valeur corrigée étant déterminée en fonction de ladite position courante de ladite commande pilote et dudit écart.

Un deuxième mode de réalisation consiste à appliquer le procédé lors d'un changement de référence d'une commande pilote.

Ainsi, la commande pilote étant dans une position neutre en l'absence d'effort exercé sur cette commande pilote par un individu, ladite première loi de pilotage étant fonction d'au moins une variable de position et d'une variable de référence correspondant à ladite position neutre, ladite loi de pilotage après transition étant ladite première loi de pilotage, ladite transition de commande correspond à la transition entre une valeur de référence dite « première valeur de référence » et une valeur de référence dite « deuxième valeur de référence » de la variable de référence.

En outre, la commande pilote étant dans une position neutre en l'absence d'effort exercé sur cette commande pilote par un individu, ladite première loi de pilotage étant fonction d'au moins une variable de position et d'une variable de référence correspondant à ladite position neutre, ladite position équivalente est ladite position neutre.

Par exemple, un pilote déplace un mini-manche et spécifie à l'aide d'un bouton que l'ordre transmis par le mini-manche doit désormais correspondre à l'ordre devant être transmis dans la position neutre du mini-manche.

Le procédé selon l'invention tend à éviter une discontinuité dans cette situation.

Par exemple, on peut aussi déterminer ladite transition de commande en surveillant une unité de réglage qui règle ladite variable de référence.

Ainsi, un mini-manche contrôle par exemple une première loi de pilotage mettant en oeuvre une première valeur de référence de la variable de référence. Un pilote bascule le mini-manche et spécifie que l'objectif en résultant représente une deuxième valeur de référence de cette variable de référence.

La première loi de pilotage est alors modifiée pour affecter cette deuxième valeur de référence à la variable de référence.

De plus, un écart séparant la position courante ayant généré la deuxième valeur de référence et la position neutre est déterminé. Par suite, la première loi de pilotage est utilisée en y introduisant non pas la valeur du paramètre contrôlé par le mini-manche, mais une valeur corrigée dépendant de cette valeur et dudit écart.

Outre un procédé, l'invention vise un véhicule appliquant ce procédé.

Selon l'invention, un véhicule est muni d'au moins un organe de direction, ledit véhicule comprenant au moins un actionneur agissant sur ledit organe de direction, ledit véhicule ayant au moins une commande pilote pour commander un actionneur afin d'agir sur ledit organe de direction,

Ce véhicule comporte :

- au moins un capteur mesurant la position de ladite commande pilote par rapport à une position neutre,

- une unité de traitement reliée à chaque capteur, l'unité de traitement comprenant une mémoire stockant une pluralité de lois de pilotage, chaque loi de pilotage déterminant un objectif à atteindre pour commander ledit actionneur en fonction d'au moins une variable de position relative à une position de ladite commande pilote par rapport à une position neutre, et le cas échéant d'une variable de référence, l'unité de traitement comprenant un calculateur pour déterminer ledit objectif en appliquant le procédé selon l'invention.

Par ailleurs, le véhicule peut comporter une unité de pilotage reliée à l'unité de traitement, audit actionneur, l'unité de pilotage comportant un sous-ensemble de calcul pour appliquer ledit procédé.

L'invention et ses avantages apparaîtront avec plus de détails dans le cadre de la description qui suit avec des exemples donnés à titre illustratif en référence aux figures annexées qui représentent :

- la figure 1, une vue schématique d'un véhicule selon l'invention, et en particulier d'un aéronef de type giravion,

- les figures 2 et 3, un schéma explicitant la détermination de la position courante d'une commande pilote,

- la figure 4, un logigramme explicitant le procédé selon l'invention, et

- la figure 5 et 6, deux schémas illustrant deux variantes d'un premier mode de réalisation, et

- la figure 7, un schéma illustrant un deuxième mode de réalisation.

Les éléments présents dans plusieurs figures distinctes sont affectés d'une seule et même référence.

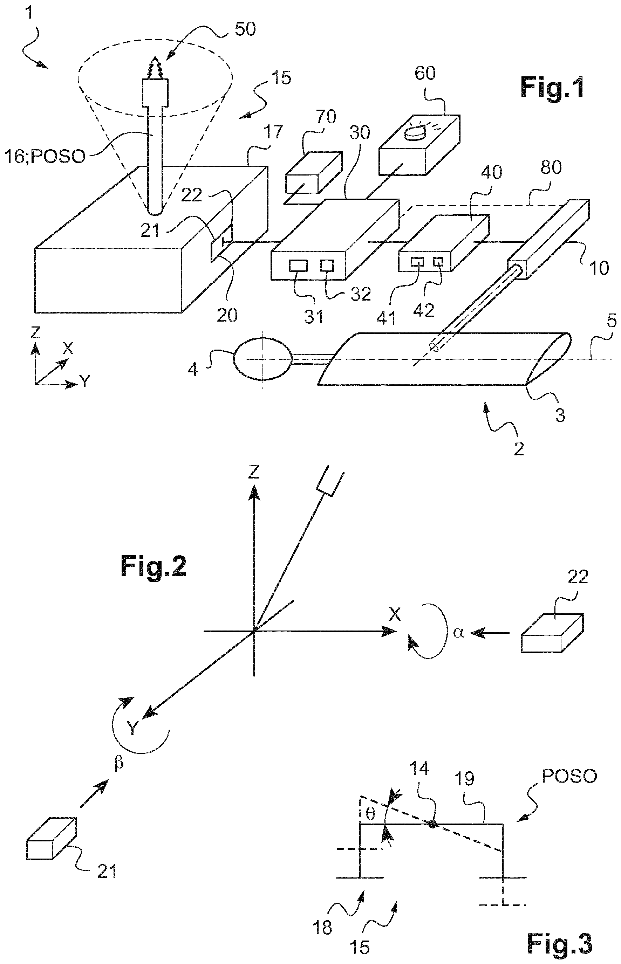

La figure 1 présente un véhicule 1 selon l'invention.

Ce véhicule 1 est muni d'au moins un organe de direction 2 utilisé pour diriger le véhicule.

Selon l'exemple de la figure 1, le véhicule 1 est un giravion muni d'au moins un organe de direction 2 de type pale 3. Cette pale 3 est mobile en rotation autour d'au moins un axe de pas 5 par rapport à un moyeu 4 ou équivalent.

Néanmoins, un organe de direction peut comprendre de manière non exhaustive une roue, un aileron, une gouverne, un volet..

Pour mouvoir un organe de direction, le véhicule est pourvu d'au moins un actionneur 10. Selon l'exemple de la figure 1, l'actionneur est une servocommande reliée à une bielle de manoeuvre en pas d'une pale. Un ensemble de plateaux de commande usuel est par exemple interposé entre la servocommande et la pale. On se référera à la littérature pour obtenir des informations relatives aux organes de direction d'un giravion et aux actionneurs associés.

Toutefois, tout type d'actionneurs peut être utilisé, tel qu'un actionneur piézoélectrique ou un actionneur rotatif par exemple.

Au moins un actionneur peut être commandé par un pilote.

Par suite, le véhicule comporte au moins une commande pilote 15 apte à générer un ordre de commande transmis à un actionneur.

La commande pilote peut contrôler au moins un actionneur en transmettant mécaniquement un ordre à une unité de traitement 30. Néanmoins, la commande pilote peut transmette un signal électrique ou optique par exemple pour contrôler au moins un organe de direction. Dès lors, la commande pilote comporte au moins un capteur 20 pour déterminer la position dans l'espace de la commande pilote par rapport à une position neutre POS0 de référence.

Selon l'exemple de la figure 1, la commande pilote 15 est dans la position neutre POS0 de référence.

Cette commande pilote 15 peut comprendre un manche 16 porté par un support 17. Ce manche s'étend en élévation le long d'un axe en élévation Z. En outre, le manche 16 peut être déplacé dans un volume conique. Par suite, le manche 16 est mobile en rotation autour d'un axe longitudinal X et d'un axe transversal Y.

Par suite et en référence à la figure 2, un premier capteur de déplacement usuel peut déterminer la position du manche 16 par rapport à l'axe transversal Y, en mesurant un angle de rotation $\beta$.

De même, un deuxième capteur de déplacement usuel peut déterminer la position du manche 16 par rapport à l'axe longitudinal X, en mesurant un angle de rotation $\alpha$.

Selon l'exemple de la figure 3, la commande pilote 15 peut être un palonnier 18. Ce palonnier 18 comprend par exemple une tige 19 mobile en rotation autour d'un axe de pivotement 14. La commande pilote comporte alors par exemple un capteur pour mesurer l'angle de pivotement $\theta$ de cette tige par rapport à la position neutre représentée en traits pleins.

Cette commande pilote transmet donc au moins un signal à une unité de traitement 30.

Cette unité de traitement 30 est ainsi reliée à chaque capteur 20 permettant de déterminer la position courante de la commande pilote. Plus précisément, l'unité de traitement 30 est connectée directement à chaque capteur ou indirectement par une unité intermédiaire. L'unité de traitement peut être du type connu dénommée « Primary Flight Control System » en langue anglaise.

De plus, l'unité de traitement comporte une mémoire 31 mémorisant notamment des lois de pilotage à appliquer pour générer un objectif. La mémoire 31 peut comprendre une ou plusieurs unités de stockage.

Chaque loi de pilotage mémorisée détermine un objectif en fonction d'au moins une variable dite « variable de position », la valeur de la variable de position étant déterminée par la position de la commande pilote dans l'espace.

De plus, au moins une loi de pilotage peut comprendre une variable de référence ayant une valeur de référence correspondant à la valeur que doit atteindre la variable de position lorsque la commande pilote est dans la position neutre. Par exemple à titre illustratif, une première loi de pilotage est de la forme suivante :

$$Obj = C1 * (V1 + V0) + C2$$

où « Obj » représente l'objectif déterminé par la loi de pilotage, « C1 » et « C2 » représentent des constantes, « V1 » représente la variable de position ajustée en fonction de la position de la commande pilote, « V0 » représente la variable de référence, « * » représente le signe de la multiplication, « + » représente le signe de l'addition.

Lorsque la commande pilote est dans la position neutre, V1 vaut alors zéro.

La valeur de référence de la variable de référence V0 peut en outre être modifiée en utilisant une unité de réglage 50 reliée à l'unité de traitement 30. Par exemple, cette unité de réglage comporte un bouton agencé sur la commande pilote correspondante. Toutefois, tout moyen tactile, vocal, ou encore visuel peut être utilisé.

Cette loi de pilotage est donnée à titre illustratif.

Pour déterminer l'objectif à atteindre, l'unité de traitement 30 comprend un calculateur 32 exécutant des instructions mémorisées dans la mémoire 31. Notamment, le calculateur détermine la loi de pilotage requise, et introduit dans cette loi de pilotage requise les valeurs de chaque variable de position représentant la position courante de la commande pilote.

Un tel calculateur peut être un calculateur usuel. Par exemple, le calculateur peut comprendre un processeur, un microprocesseur, un microcontrôleur, ou encore au moins un circuit logique.

Pour déterminer la loi de pilotage requise, l'unité de traitement 30 peut être reliée à des instruments de mesure 70 du véhicule. De tels instruments de mesure 70 peuvent comprendre des moyens de mesure usuels pour mesurer au moins une vitesse du véhicule, des moyens de mesure pour mesurer au moins un effort exercé sur au moins un train d'atterrissage... En particulier, les instruments de mesure 70 peuvent inclure des moyens anémométriques (de type sonde Pitot, anémométrie laser...), des moyens de positionnement par satellite (position, absolue, vitesse sol), et des moyens de mesures inertielles de la dynamique du véhicule (vitesses angulaires, facteur de charge).

L'unité de traitement 30 peut aussi être reliée à une unité de sélection 60 permettant de déterminer la loi de pilotage à appliquer. Par exemple, cette unité de sélection comporte un bouton rotatif. Toutefois, tout moyen tactile, vocal, ou encore visuel peut être utilisé.

L'objectif déterminé par une loi de pilotage permet de commander un actionneur 10 afin de diriger le véhicule. Cet objectif peut être une commande directement exploitable par un actionneur 10. Dès lors, l'unité de traitement est directement reliée à l'actionneur à l'aide d'une liaison 80 représentée en pointillés.

Toutefois, l'objectif peut être d'une nature non exploitable par un actionneur. Par exemple, l'objectif peut être une valeur de vitesse sol à atteindre. Pour atteindre cette vitesse sol, plusieurs organes de direction peuvent être déplacés par plusieurs actionneurs.

Dès lors, l'unité de traitement est reliée à une unité de pilotage 40 interposée entre les actionneurs 10 et l'unité de traitement 30. Eventuellement, l'unité de traitement 30 et l'unité de pilotage 40 sont confondues au sein d'un même équipement.

Cette unité de pilotage 40 peut comprendre une mémoire 41 et un sous-ensemble de calcul 42. Le sous-ensemble de calcul 42 exécute alors des instructions par exemple mémorisées dans la mémoire 41 pour déterminer les consignes à transmettre à au moins un actionneur 10 pour atteindre l'objectif transmis par l'unité de traitement. Par exemple, la mémoire contient des lois fournissant des consignes à transmettre auxdits actionneurs en fonction de l'objectif reçu.

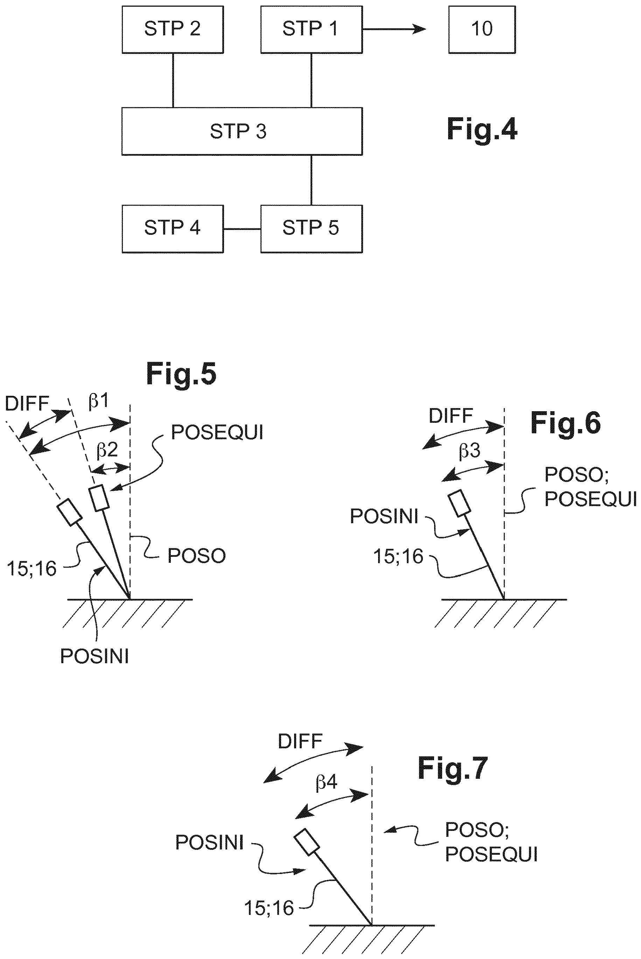

La figure 4 explicite le procédé mis en oeuvre par l'invention.

Durant une première étape STP1, la position courante d'une commande pilote est transmise à l'unité de traitement, au moins un actionneur étant commandé en affectant la valeur d'au moins un paramètre représentant cette position courante à au moins une variable de position d'une première loi de pilotage.

En reprenant l'exemple précédent, la première loi de pilotage est de la forme Obj = C1 * (V1 + V0) + C2. Un capteur mesure par exemple la rotation d'une partie d'une commande pilote autour d'un axe par rapport à la position neutre. L'unité de traitement reçoit un signal représentant l'angle mesuré. L'unité de traitement assigne alors à la variable de position V1 la valeur de l'angle mesuré pour déterminer l'objectif Obj à atteindre.

L'objectif Obj est alors transmis directement ou indirectement à au moins un actionneur 10.

En parallèle, durant une deuxième étape STP2, une position équivalente de la commande pilote est déterminée, par exemple en déterminant la valeur de chaque variable de position représentant cette position équivalente dans la loi de pilotage concernée. Cette position équivalente représente la position théorique que la commande pilote 15 doit atteindre suite à une transition de commande pour ne pas requérir une action des actionneurs 10 au moment de la transition de commande.

L'unité de traitement détermine alors la loi de pilotage à appliquer au moment d'une future transition de commande. Cette loi de pilotage est dite «loi de pilotage après transition »

Par exemple, une transition de commande peut conduire à appliquer une deuxième loi de pilotage de la forme :

$$Obj = C1' * (V1' + V0') + C2'$$

où « Obj » représente l'objectif déterminé par la deuxième loi de pilotage, « C1' » et « C2' » représentent des constantes, « V1' » représente la variable de position ajustée en fonction de la position de la commande pilote, « V0' » représente ladite variable de référence, « * » représente le signe de la multiplication, « + » représente le signe de l'addition.

Selon cet exemple, la première loi de pilotage et la deuxième loi de pilotage génèrent un même objectif Obj.

A titre illustratif, la première loi de pilotage et la deuxième loi de pilotage génèrent un objectif d'assiette en tangage de l'aéronef, la valeur de cet objectif étant néanmoins calculée en appliquant deux lois différentes. Par exemple, la première loi de pilotage génère un objectif d'assiette en tangage pour tenir une vitesse sol de consigne, et la deuxième loi de pilotage génère un objectif d'assiette en tangage pour tenir une vitesse air de consigne.

L'unité de traitement détermine alors la valeur de la variable de position V1' à atteindre pour ne pas modifier l'objectif. Cette valeur de la variable de position V1' représente en effet la position équivalente que devrait atteindre la commande pilote pour ne pas induire de modification des actionneurs au moment de la transition.

Durant une étape STP3, au moins un écart entre ladite position équivalente et ladite position courante est déterminé. Par exemple, un écart est déterminé pour chaque variable de position représentant la position d'une commande pilote dans la loi de pilotage concernée.

Selon une première alternative, un écart est égal à une différence entre la position équivalente et la position courante. Par exemple, l'écart est égal à une différence entre la valeur d'une variable de position représentant la position équivalente et la valeur de cette même variable de position représentant la position courante soit V1'-V1 selon l'exemple précédent.

Selon une deuxième alternative, un écart est égal à une différence entre la position courante et la position équivalente. Par exemple, l'écart est égal à une différence entre la valeur d'une variable de position représentant la position courante et la valeur de cette même variable de position représentant la position équivalente soit V1-V1' selon l'exemple précédent.

Durant une quatrième étape STP4, des équipements du véhicule déterminent si une transition de commande doit être opérée.

Une transition de commande peut intervenir lorsqu'une première loi de pilotage doit être remplacée par une deuxième loi de pilotage.

Cette modification de la loi de pilotage à appliquer peut être requise par un pilote manipulant l'unité de sélection 60. Ainsi, une transition doit être mise en oeuvre suite à une manoeuvre de l'unité de sélection 60.

Selon une autre possibilité applicable à un aéronef, des lois de pilotage sont associées à des phases de vol. Par exemple, une loi de pilotage est appliquée durant une phase de vol, et une autre loi de pilotage est appliquée durant une autre phase de vol.

Dès lors, l'unité de traitement sollicite les instruments de mesure 70 pour déterminer la phase de vol courante et la loi de pilotage à appliquer.

Une transition de commande peut aussi intervenir en modifiant la valeur de référence d'une variable de référence représentant une commande pilote dans une position neutre.

L'unité de traitement surveille ainsi l'unité de réglage 50 pour déterminer si un pilote requiert une telle modification.

Par conséquent, l'unité de traitement est en relation avec de multiples organes pour déterminer la présence d'une transition de commande, à savoir la présence de faits devant induire la transition de commande.

Si une transition de commande est requise, l'objectif servant à contrôler au moins un actionneur est déterminé en appliquant une loi de pilotage dite « loi de pilotage après transition »

Suivant la situation, la loi de pilotage après transition peut être une deuxième loi de pilotage distincte de la première loi de pilotage précédemment utilisée, ou la première loi de pilotage précédemment utilisée mais pourvue d'au moins une variable de référence amendée.

Toutefois, chaque valeur de position introduite dans la loi de pilotage après transition est corrigée en fonction de l'écart correspondant. La valeur corrigée introduite dans la loi de pilotage après transition est donc déterminée en fonction de la position courante de la commande pilote et d'un écart.

Selon la première alternative précédente, la valeur corrigée d'une variable de position est égale à la somme de la valeur de la variable de position représentant la position courante de la commande pilote et de l'écart correspondant.

Selon la deuxième alternative précédente, la valeur corrigée d'une variable de position est égale à la différence de la valeur de la variable de position représentant la position courante de la commande pilote et de l'écart correspondant.

En outre, l'unité de traitement détermine si la commande pilote est déplacée par un pilote par des méthodes usuelles, et par exemple une méthode de sommation.

Si le pilote rapproche la commande pilote de la position équivalente et tant que ledit écart est non nul, l'unité de traitement réduit la valeur de cet écart proportionnellement au déplacement de la commande pilote.

La variable de position n'est plus corrigée lorsque l'écart devient nul.

Les figures 5 et 6 illustrent deux variantes d'un premier mode de réalisation. Pour illustrer l'invention, on considère une première loi de pilotage appliquée avant la transition de la forme simple décrite précédemment à savoir :

$$Obj = C1 * (V1 + V0) + C2$$

Selon la figure 5, l'unité de traitement gère une transition de commande d'une première loi de pilotage vers une deuxième loi de pilotage fournissant un objectif relatif à un même paramètre, ladite première loi de pilotage étant appliquée avant ladite transition de commande, ladite deuxième loi de pilotage étant ladite loi de pilotage après transition appliquée à partir de la transition. La deuxième loi de pilotage est alors par exemple de la forme : Obj = C1' * (V1' + VO') + C2'

Avant la transition, la commande pilote est dans la première position POSINI. L'objectif est alors déterminé en affectant l'angle de rotation β1 à la variable de position V1.

De plus, l'unité de traitement détermine la position équivalente POSEQUI, en déterminant que la variable de position V1' de la deuxième loi de pilotage doit atteindre un angle de rotation β2 pour que la première loi de pilotage et la deuxième loi de pilotage génère le même objectif.

L'unité de traitement en déduit un écart DIFF séparant la position courante de la position théorique.

Lorsque la transition de la première loi de pilotage à la deuxième loi de pilotage est requise, l'unité de traitement met en oeuvre la deuxième loi de pilotage.

L'unité de traitement affecte alors une valeur corrigée à la variable de position V1' de la deuxième loi de pilotage.

Ainsi, l'unité de traitement considère selon l'alternative appliquée que la variable de position V1' est égale :

- à la somme de la valeur courante β1 de la variable de position et de l'écart DIFF soit : V1'= β1 + DIFF= β2,
- à la différence de la valeur courante β1 de la variable de position et de l'écart DIFF soit : V1'= β1 - DIFF = β2

En outre, la valeur de l'écart DIFF diminue lorsque la commande pilote se rapproche de la position équivalente POSEQUI. Par exemple, si la commande pilote est basculée d'un angle de 2 degrés vers la position équivalente, l'écart DIFF est définitivement réduit de cet angle de 2 degrés.

Selon la figure 6, l'unité de traitement gère une transition de commande d'une première loi de pilotage vers une deuxième loi de pilotage fournissant un objectif relatif respectivement à un premier paramètre et un deuxième paramètre différents.

La deuxième loi de pilotage est alors par exemple de la forme :

$$Obj' = C1' * (V1' + V0') + C2'$$

Avant la transition, la commande pilote est dans la première position POSINI. L'objectif Obj est alors déterminé en affectant l'angle β3 à la variable de position V1 dans la première loi de pilotage. Par exemple, cet objectif est relatif à un paramètre de vitesse sol.

La deuxième loi de pilotage est alors par exemple de la forme : Obj' = C1' * (V1' + V0') + C2'. L'objectif Obj' déterminé par la deuxième loi de pilotage est par exemple un objectif de vitesse air indiquée.

Selon le procédé de l'invention, on détermine la valeur courante du deuxième paramètre dite « valeur de correspondance », à savoir la vitesse air indiquée courante selon cet exemple. L'unité de traitement peut faire appel aux instruments de mesure 70 par exemple pour déterminer cette valeur courante du deuxième paramètre faisant l'objet de la deuxième loi de pilotage. La valeur de correspondance peut de manière alternative être estimée.

L'unité de traitement affecte alors à la variable de référence V0' de la deuxième loi de pilotage la valeur de correspondance, ladite position neutre représentant ladite position équivalente.

De plus, l'unité de traitement considère que la position équivalente POSEQUI de la commande pilote est la position neutre POS0.

L'unité de traitement en déduit un écart DIFF séparant la position courante de la position théorique.

Lorsque la transition de la première loi de pilotage à la deuxième loi de pilotage est requise, l'unité de traitement met en oeuvre la deuxième loi de pilotage.

L'unité de traitement applique alors une valeur corrigée à la variable de position V1' de la deuxième loi de pilotage.

Ainsi, l'unité de traitement considère selon l'alternative appliquée que la variable de position V1' est égale :

- à la somme de la valeur courante $\beta 3$ de la variable de position et de l'écart DIFF soit : V1'= $\beta 3$ + DIFF,
- à la différence de la valeur courante $\beta 3$ de la variable de position et de l'écart DIFF soit : V1'= (33 - DIFF

En outre, la valeur de l'écart DIFF diminue lorsque la commande pilote se rapproche de la position équivalente POSEQUI.

Selon la figure 7, l'unité de traitement gère une transition de commande résultant de la modification de la valeur de référence d'une variable de référence de la première loi de pilotage. Avant et après la transition, la première loi de pilotage utilise une variable de référence égale respectivement à une première valeur de référence et à une deuxième valeur de référence.

Avant la transition, la commande pilote est dans la première position POSINI. L'objectif Obj est alors déterminé en affectant l'angle $\beta 4$ à la variable de position V1 dans la première loi de pilotage, et en affectant une première valeur de référence V11 à la variable de référence V1. Dès lors, l'objectif Obj est déterminé par la relation suivante :

$$Obj = C1 * (\beta 4 + V11) + C2.$$

L'objectif Obj' déterminé par la deuxième loi de pilotage est par exemple un objectif de vitesse air indiquée.

Ce pilote manipule par exemple de l'unité de réglage 50 pour indiquer que l'objectif atteint dit « objectif de référence » doit être l'objectif lorsque la commande pilote est dans la position neutre.

Dès lors, l'unité de traitement détermine la deuxième valeur de référence V12 que doit atteindre la variable de référence lorsque la commande pilote est dans la position nulle. Selon l'exemple présenté, cette deuxième valeur de référence est alors égale :

$$V12 = (Obj - C2) / C1.$$

De plus, l'unité de traitement considère que la position équivalente POSEQUI de la commande pilote est la position neutre POS0. L'unité de traitement en déduit un écart DIFF séparant la position courante de la position théorique.

Suite à la transition, l'unité de traitement modifie la première loi de pilotage en affectant la deuxième valeur de référence V12 à la variable de référence soit :

$$Obj = C1 * (V1 + V12) + C2.$$

L'unité de traitement applique alors une valeur corrigée à la variable de position V1 de la deuxième loi de pilotage.

De plus, l'unité de traitement considère selon l'alternative appliquée que la variable de position V1 est égale :

- à la somme de la valeur courante $\beta 4$ de la variable de position et de l'écart DIFF soit : V1= $\beta 4$ + DIFF,
- à la différence de la valeur courante $\beta 3$ de la variable de position et de l'écart DIFF soit : V1= $\beta 4$ - DIFF

En outre, la valeur de l'écart DIFF diminue lorsque la commande pilote se rapproche de la position équivalente POSEQUI.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

**Revendications**

1. Procédé pour commander un actionneur (10) agissant sur un organe de direction (2) d'un véhicule (1), ledit actionneur (10) étant commandé par une commande pilote (15) manoeuvrable par un individu en appliquant une pluralité de lois de pilotage, chaque loi de pilotage déterminant un objectif à atteindre pour commander ledit actionneur (10) en fonction d'au moins une variable de position relative à une position de ladite commande pilote (15) par rapport à une position neutre,
ledit procédé comportant l'étape de

   - détermination d'une position courante de ladite commande pilote (15), ledit actionneur (10) étant commandé en affectant ladite position courante à ladite au moins une variable de position d'une première loi de pilotage,

**caractérisé en ce que** ledit procédé comporte les étapes suivantes:

- détermination d'une position équivalente que ladite commande pilote (15) doit atteindre suite à une transition de commande pour ne pas modifier ledit actionneur (10),
- détermination d'au moins un écart entre ladite position équivalente et ladite position courante,
- détermination de la présence de ladite transition de commande,
- à partir de la transition de commande, détermination d'un objectif pour commander ledit actionneur (10) en appliquant une loi de pilotage après transition, ledit objectif étant déterminé en affectant une valeur corrigée à au moins une dite variable de position dans ladite loi de pilotage après transition, ladite valeur corrigée étant déterminée en fonction de ladite position courante de ladite commande pilote et d'un dit écart,
- détermination d'un déplacement de ladite commande pilote (15),
- tant que ledit écart est non nul, réduction dudit écart proportionnellement audit déplacement lorsque ladite commande pilote (15) est rapprochée de ladite position équivalente.

2. Procédé selon la revendication 1, **caractérisé en ce que** ladite transition de commande correspond à la transition entre ladite première loi de pilotage et une deuxième loi de pilotage, ladite première loi de pilotage étant appliquée avant ladite transition de commande, ladite deuxième loi de pilotage étant ladite loi de pilotage après transition qui est appliquée à partir de la transition de commande.

3. Procédé selon la revendication 2, **caractérisé en ce que**, le véhicule étant un aéronef, on détermine la présence d'une transition de commande en déterminant une phase de vol courante de l'aéronef, ladite première loi de pilotage étant appliquée durant une première phase de vol, ladite deuxième loi de pilotage étant appliquée durant une deuxième phase de vol distincte de la première phase de vol.

4. Procédé selon la revendication 2, **caractérisé en ce qu'**on détermine ladite transition de commande en surveillant une unité de sélection (60) qui permet de déterminer la loi de pilotage à appliquer.

5. Procédé selon l'une quelconque des revendications 1 à 4, **caractérisé en ce que** ladite commande pilote (15) étant dans une position neutre en l'absence d'effort exercée sur cette commande pilote par un individu, ladite première loi de pilotage étant fonction d'au moins une variable de position et d'une variable de référence correspondant à ladite position neutre, ladite loi de pilotage après transition étant ladite première loi de pilotage, ladite transition de commande correspond à la transition entre une valeur de référence dite « première valeur de référence » et une valeur de référence dite « deuxième valeur de référence » de ladite variable de référence.

6. Procédé selon la revendication 5, **caractérisé en ce qu'**on détermine ladite transition de commande en surveillant une unité de réglage (50) qui règle ladite variable de référence.

7. Procédé selon l'une quelconque des revendications 2 à 4, **caractérisé en ce que** pour déterminer ladite position équivalente, on détermine la position théorique que doit atteindre ladite commande pilote pour transmettre un objectif en appliquant ladite deuxième loi de pilotage identique à un objectif généré en appliquant ladite première loi de pilotage lorsque ladite commande pilote est dans ladite position courante.

8. Procédé selon la revendication 7, **caractérisé en ce que** ladite première loi de pilotage et ladite deuxième loi de pilotage générant un objectif relatif à un même paramètre, pour déterminer ladite position équivalente, on réalise les étapes suivantes :

- détermination d'un objectif courant en affectant ladite position courante à au moins une variable de position de ladite première loi de pilotage,
- détermination d'une position théorique que doit atteindre ladite commande pilote (15) pour générer ledit objectif courant en affectant ladite position théorique à au moins une variable de position de ladite deuxième loi de pilotage, ladite position équivalente étant égale à ladite position théorique.

9. Procédé selon la revendication 7, **caractérisé en ce que**, chaque loi de pilotage étant fonction d'au moins une variable de position et d'une variable de référence correspondant à ladite position neutre, ladite première loi de pilotage générant un premier objectif relatif à un premier paramètre et ladite deuxième loi de pilotage générant un deuxième objectif relatif à un deuxième paramètre différent dudit premier paramètre, pour déterminer ladite position équivalente :

- on détermine la deuxième valeur du deuxième paramètre à atteindre au moment de ladite transition de commande dite « valeur de correspondance »,
- on affecte à ladite variable de référence ladite valeur de correspondance, ladite position neutre représentant ladite position équivalente.

10. Procédé selon la revendication 7, **caractérisé en ce que**, chaque loi de pilotage étant fonction d'au moins une variable de position et d'une variable de référence correspondant à ladite position neutre, ladite première loi de pilotage générant un premier objectif relatif à un premier paramètre et ladite deuxième loi de pilotage générant un deuxième objectif relatif à un deuxième paramètre différent dudit premier paramètre, pour déterminer ladite position équivalente :

- on détermine la deuxième valeur du deuxième paramètre à atteindre au moment de ladite transition de commande dite « valeur de correspondance »,
- on pondère la valeur de correspondance pour déterminer une valeur pondérée selon un facteur de pondération donné, la valeur pondérée étant égale au produit de la valeur de correspondance et du facteur de pondération,
- on détermine ladite position équivalente en affectant à ladite variable de référence ladite valeur pondérée dans ladite deuxième loi de pilotage,

11. Procédé selon la revendication 5, **caractérisé en ce que** ladite commande pilote (15) étant dans une position neutre en l'absence d'effort exercé sur cette commande pilote par un individu, ladite première loi de pilotage étant fonction d'au moins une variable de position et d'une variable de référence correspondant à ladite position neutre, ladite position équivalente est ladite position neutre.

12. Procédé selon l'une quelconque des revendications 1 à 11, **caractérisé en ce que** ledit objectif est un ordre transmis audit actionneur.

13. Procédé selon l'une quelconque des revendications 1 à 11, **caractérisé en ce que** ledit objectif est transmis à une unité de pilotage (40), ladite unité de pilotage (40) appliquant au moins une loi de pilotage pour transformer ledit objectif au moins en un signal de commande transmis à un actionneur (10).

14. Procédé selon l'une quelconque des revendications 1 à 13, **caractérisé en ce qu'**au moins un écart est égal à une différence entre ladite position équivalente et ladite position courante, ladite valeur corrigée étant égale à la somme de ladite position courante de ladite commande pilote et dudit écart.

15. Procédé selon l'une quelconque des revendications 1 à 13, **caractérisé en ce qu'**au moins un écart est égal à une différence entre ladite position courante et ladite position équivalente, ladite valeur corrigée étant égale à la différence de ladite position courante de ladite commande pilote et dudit écart.

16. Véhicule (1) muni d'au moins un organe de direction (2), ledit véhicule (1) comprenant au moins un actionneur (10) agissant sur ledit organe de direction (2), ledit véhicule (1) ayant au moins une commande pilote (15) pour commander un actionneur (10) afin d'agir sur ledit organe de direction (2), ledit véhicule (1) comportant

- au moins un capteur (20) mesurant la position de ladite commande pilote (15) par rapport à une position neutre (POS0),

**caractérisé en ce que** ledit véhicule (1) comporte:

- une unité de traitement (30) reliée à chaque capteur (20), l'unité de traitement (30) comprenant une mémoire (31) stockant une pluralité de lois de pilotage, chaque loi de pilotage déterminant un objectif à atteindre pour commander ledit actionneur (10) en fonction d'au moins une variable de position relative à une position de ladite commande pilote (15) par rapport à une position neutre, l'unité de traitement (30) comprenant un calculateur (32) pour déterminer ledit objectif en appliquant le procédé selon l'une quelconque des revendications 1 à 15.

17. Véhicule selon la revendication 16, **caractérisé en ce que** ledit véhicule (1) comporte une unité de pilotage (40) reliée à l'unité de traitement (30) et audit actionneur (10), l'unité de pilotage (40) comportant un sous-ensemble de calcul pour appliquer le procédé selon la revendication 13.

## Patentansprüche

1. Verfahren zum Steuern eines Stellglieds (10), welches auf ein Lenkungselement (2) eines Fahrzeugs (1) einwirkt, wobei das Stellglied (10) durch eine Vorsteuerung (15) gesteuert wird, die durch eine Person betätigbar ist, indem eine Mehrzahl von Steuerbarkeitsgesetzen angewendet werden, wobei jedes Steuerbarkeitsgesetz ein zu erreichendes Ziel zur Steuerung des Stellglieds (10) in Abhängigkeit von mindestens einer Positionsvariablen bezüglich einer Position der Vorsteuerung (50) relativ zu einer neutralen Position bestimmt, wobei das Verfahren den Schritt umfasst:

- Bestimmung einer aktuellen Position der Vorsteuerung (15), wobei das Stellglied (10) gesteuert wird, indem die aktuelle Position der mindestens einen Positionsvariablen eines ersten Steuerbarkeitsgesetztes zugewiesen wird,

**dadurch gekennzeichnet, dass** das Verfahren folgende Schritte aufweist:

- Bestimmung einer äquivalenten Position, die die Vorsteuerung (15) nach einer Steuerungsumschaltung erreichen muss, um das Stellglied (10) nicht zu verändern,
- Bestimmung mindestens eines Abstands zwischen der äquivalenten Position und der aktuellen Position,
- Bestimmung des Vorliegens der Steuerungsumschaltung,
- ausgehend von der Steuerungsumschaltung, Bestimmung eines Ziels, um das Stellglied (10) zu steuern, indem ein Steuerbarkeitsgesetz nach dem Umschalten angewendet wird, wobei das Ziel bestimmt wird durch Zuweisen eines korrigierten Wertes zu mindestens einer der Positionsvariablen des Steuerbarkeitsgesetzes nach der Umschaltung, wobei der korrigierte Wert bestimmt wird in Abhängigkeit von der aktuellen Position der Vorsteuerung und des Abstands,
- Bestimmung einer Bewegung der Vorsteuerung (15),
- solange der Abstand nicht Null ist, Reduzierung des Abstands proportional zu der Bewegung, wenn die Vorsteuerung (15) an die äquivalente Position angenähert ist.

2. Verfahren nach Anspruch 1,
**dadurch gekennzeichnet, dass** die Steuerungsumschaltung einer Umschaltung zwischen dem ersten Steuerbarkeitsgesetz und einem zweiten Steuerbarkeitsgesetz entspricht, wobei das erste Steuerbarkeitsgesetz vor der Steuerungsumschaltung angewendet wird, wobei das zweite Steuerbarkeitsgesetz dem Steuerbarkeitsgesetz nach der Umschaltung entspricht, das ab der Steuerungsumschaltung angewendet wird.

3. Verfahren nach Anspruch 2,
**dadurch gekennzeichnet, dass** das Fahrzeug ein Luftfahrzeug ist, wobei das Vorliegen einer Steuerungsumschaltung bestimmt wird, indem eine aktuelle Flugphase des Luftfahrzeugs bestimmt wird, wobei das erste Steuerbarkeitsgesetz während der ersten Flugphase angewendet wird, das zweite Steuerbarkeitsgesetz während einer zweiten Flugphase, die von der ersten Flugphase verschieden ist, angewendet wird.

4. Verfahren nach Anspruch 2,

**dadurch gekennzeichnet, dass** die Steuerungsumschaltung bestimmt wird, indem eine Auswahleinheit (60) überwacht wird, die es erlaubt, das anzuwendende Steuerbarkeitsgesetz zu bestimmen.

5. Verfahren nach einem der Ansprüche 1 bis 4,
**dadurch gekennzeichnet, dass** die Vorsteuerung (15) sich in Abwesenheit einer auf diese Vorsteuerung durch eine Person ausgeübten Kraft sich in einer neutralen Position befindet, wobei das erste Steuerbarkeitsgesetz von mindestens einer Positionsvariablen und einer Bezugsvariablen abhängt, die der neutralen Position entspricht, wobei das Steuerbarkeitsgesetz nach dem Umschalten das erste Steuerbarkeitsgesetz ist, die Steuerungsumschaltung der Umschaltung zwischen einem "erster Bezugswert" genannten Bezugswert und einem "zweiter Bezugswert" genannten Bezugswert der Bezugsvariablen entspricht.

6. Verfahren nach Anspruch 5,
**dadurch gekennzeichnet, dass** die Steuerungsumschaltung bestimmt wird durch Überwachung einer Regelungseinheit (50), die die Bezugsvariable regelt.

7. Verfahren nach einem der Ansprüche 2 bis 4,
**dadurch gekennzeichnet, dass** man, um die äquivalente Position zu bestimmen, die theoretische Position bestimmt, die die Vorsteuerung erreichen muss, um ein Ziel zu übertragen, indem das zweite Steuerbarkeitsgesetz angewendet wird, das gleich einem Ziel ist, welches erzeugt wird durch Anwenden des ersten Steuerbarkeitsgesetzes, wenn die Vorsteuerung sich in der aktuellen Position befindet.

8. Verfahren nach Anspruch 7,
**dadurch gekennzeichnet, dass** das erste Steuerbarkeitsgesetz und das zweite Steuerbarkeitsgesetz ein Ziel bezüglich eines selben Parameters erzeugen, um die äquivalente Position zu bestimmen, wobei folgende Schritte ausgeführt werden:

- Bestimmung eines aktuellen Ziels, indem die aktuelle Position mindestens einer Positionsvariablen des ersten Steuerbarkeitsgesetzes zugewiesen wird,
- Bestimmung einer theoretischen Position, die die Vorsteuerung (15) einnehmen muss, um das aktuelle Ziel zu erzeugen, indem die theoretische Position mindestens einer Positionsvariablen des zweiten Steuerbarkeitsgesetztes zugewiesen wird, wobei die äquivalente Position gleich der theoretischen Position ist.

9. Verfahren nach Anspruch 7,
**dadurch gekennzeichnet, dass** jedes Steuerbarkeitsgesetz von mindestens einer Positionsvariablen und einer Bezugsvariablen, die einer neutralen Position entspricht, abhängt, wobei das erste Steuerbarkeitsgesetz ein erstes Ziel bezüglich eines ersten Parameters erzeugt, und das zweite Steuerbarkeitsgesetz ein zweites Ziel bezüglich eines zweiten Parameters erzeugt, der sich von dem ersten Parameter unterscheidet, wobei zur Bestimmung der äquivalenten Position:

- der zweite Wert des zweiten Parameters, der im Moment der Steuerungsumschaltung erreicht werden muss, genannt "Korrespondenzwert", bestimmt wird,
- der Bezugsvariablen der Korrespondenzwert zugeordnet wird, wobei die neutrale Position der äquivalenten Position entspricht.

10. Verfahren nach Anspruch 7,
**dadurch gekennzeichnet, dass** jedes Steuerbarkeitsgesetz von mindestens einer Positionsvariablen und einer Bezugsvariablen abhängt, die der neutralen Position entspricht, wobei das erste Steuerbarkeitsgesetz ein erstes Ziel bezüglich eines ersten Parameters erzeugt, und das zweite Steuerbarkeitsgesetz ein zweites Ziel bezüglich eines zweiten Parameters erzeugt, der von dem ersten Parameter verschieden ist, wobei zur Bestimmung der äquivalenten Position:

- der zweite Wert des zweiten Parameters, der im Moment der Steuerungsumschaltung erreicht werden muss, genannt "Korrespondenzwert", bestimmt wird,
- der Korrespondenzwert gewichtet wird, um einen mit einem vorgegebenen Wichtungsfaktor gewichteten Wert zu bestimmen, wobei der gewichtete Wert gleich dem Produkt aus dem Korrespondenzwert und dem Wichtungsfaktor ist,
- die äquivalente Position bestimmt wird, indem der Bezugsvariablen der gewichtete Wert in dem zweiten Steuerbarkeitsgesetz zugeordnet wird.

11. Verfahren nach Anspruch 5,
**dadurch gekennzeichnet, dass** die Vorsteuerung (15) sich bei Abwesenheit einer auf die Vorsteuerung durch eine Person ausgeübten Kraft in einer neutralen Position befindet, wobei das erste Steuerbarkeitsgesetz von mindestens einer Positionsvariablen und einer Bezugsvariablen, die dieser neutralen Position entspricht, abhängt, wobei die äquivalente Position die neutrale Position ist.

12. Verfahren nach einem der Ansprüche 1 bis 11,
**dadurch gekennzeichnet, dass** das Ziel ein Befehl ist, der an das Stellglied übertragen wird.

13. Verfahren nach einem der Ansprüche 1 bis 11,

**dadurch gekennzeichnet, dass** das Ziel an eine Vorsteuerungseinheit (40) übertragen wird, wobei die Vorsteuerungseinheit (40) mindestens ein Steuerbarkeitsgesetz anwendet, um das Ziel mindestens in ein Steuersignal umzuwandeln, das an ein Stellglied (10) übertragen wird.

14. Verfahren nach einem der Ansprüche 1 bis 13,
**dadurch gekennzeichnet, dass** mindestens ein Abstand gleich einer Differenz zwischen der äquivalenten Position und der aktuellen Position ist, wobei der korrigierte Wert gleich der Summe aus der aktuellen Position der Vorsteuerung und dem Abstand ist.

15. Verfahren nach einem der Ansprüche 1 bis 13,
**dadurch gekennzeichnet, dass** mindestens ein Abstand gleich einer Differenz aus der aktuellen Position und der äquivalenten Position ist, wobei der korrigierte Wert gleich der Differenz aus der aktuellen Position der Vorsteuerung und diesem Abstand ist.

16. Fahrzeug (1) mit mindestens einem Lenkungselement (2), wobei das Fahrzeug (1) mindestens ein Stellglied (10) aufweist, das auf das Lenkungselement (2) einwirkt, wobei das Fahrzeug (1) mindestens eine Vorsteuerung (15) zum Steuern eines Stellglieds (10) aufweist, um auf das Lenkungselement (2) einzuwirken, wobei das Fahrzeug (1) aufweist:

- mindestens einen Sensor (20), der die Position der Vorsteuerung (15) relativ zu einer neutralen Position (POS0) misst,

**dadurch gekennzeichnet, dass** das Fahrzeug (1) aufweist:

- eine Verarbeitungseinheit (30), die mit jedem Sensor (20) verbunden ist, wobei die Verarbeitungseinheit (30) einen Speicher (31) aufweist, der eine Mehrzahl von Steuerbarkeitsgesetzen speichert, wobei jedes Steuerbarkeitsgesetz ein zu erreichendes Ziel bestimmt, um das Stellglied (10) in Abhängigkeit von mindestens einer Positionsvariablen bezüglich einer Position der Vorsteuerung (15) relativ zu einer neutralen Position zu steuern, wobei die Verarbeitungseinheit (30) einen Rechner (31) aufweist zum Bestimmen des Ziels durch Anwendung des Verfahrens nach einem der Ansprüche 1 bis 15.

17. Fahrzeug nach Anspruch 16,
**dadurch gekennzeichnet, dass** das Fahrzeug (1) eine Vorsteuerungseinheit (40) aufweist, die mit der Verarbeitungseinheit (30) und dem Stellglied (10) verbunden ist, wobei die Vorsteuerungseinheit (40) eine Rechen-Untergruppe aufweist zur Anwendung des Verfahrens nach Anspruch 13.

## Claims

1. Method for controlling an actuator (10) acting on a steering member (2) of a vehicle (1), said actuator (10) being controlled by a pilot control (15) manoeuvrable by a person by applying a plurality of piloting laws, each piloting law determining a target to be reached for controlling said actuator (10) as a function of at least one position variable relating to a position of said pilot control (15) in relation to a neutral position, said method comprising the step of determining a current position of said pilot control (15), said actuator (10) being controlled by assigning said current position to said at least one position variable of a first piloting law, **characterised in that** said method comprises the following steps:

   - determining an equivalent position that said pilot control (15) needs to reach following a control transition so as not to modify said actuator (10),
   - determining at least one distance between said equivalent position and said current position,
   - determining the presence of said control transition,
   - from the control transition, determining a target for controlling said actuator (10) by applying a post-transition piloting law, said target being determined by assigning a corrected value to at least one position variable in said post-transition piloting law, said corrected value being determined as a function of said current position of said pilot control and of a distance,
   - determining a movement of said pilot control (15),
   - as long as said distance is not zero, reducing said distance in proportion to said movement when said pilot control (15) is brought towards said equivalent position.

2. Method according to claim 1, **characterised in that** said control transition corresponds to the transition between said first piloting law and a second piloting law, said first piloting law being applied before said control transition, said second piloting law being said post-transition piloting law which is applied as from the control transition.

3. Method according to claim 2, **characterised in that**, when the vehicle is an aircraft, the presence of a control transition is determined by determining a current flight phase of the aircraft, said first piloting law being applied during a first flight phase, said second piloting law being applied during a second flight phase distinct from the first flight phase.

4. Method according to claim 2, **characterised in that** said control transition is determined by monitoring a selection unit (60) which makes it possible to determine the piloting law to be applied.

5. Method according to any of claims 1 to 4, **characterised in that**, said pilot control (15) being in a neutral position in the absence of any force being exerted on said pilot control by a person, said first piloting law being a function of at least one position variable and of one reference variable corresponding to said neutral position and said post-transition piloting law being said first piloting law, said control transition corresponds to the transition between a reference value referred to as the "first reference value" and a reference value referred to as the "second reference value" of said reference variable.

6. Method according to claim 5, **characterised in that** said control transition is determined by monitoring an adjustment unit (50) which adjusts said reference variable.

7. Method according to any of claims 2 to 4, **characterised in that**, in order to determine said equivalent position, the theoretical position that said pilot control needs to reach in order to transmit a target is determined by applying said second piloting law that is identical to a target generated by applying said first piloting law when said pilot control is in said current position.

8. Method according to claim 7, **characterised in that**, said first piloting law and said second piloting law generating a target relating to the same parameter, in order to determine said equivalent position, the following steps are carried out:

   - determining a current target by assigning said current position to at least one position variable of said first piloting law, and
   - determining a theoretical position that the pilot control (15) needs to reach in order to generate said current target by assigning said theoretical position to at least one position variable of said second piloting law, said equivalent position being equal to said theoretical position.

9. Method according to claim 7, **characterised in that**, each piloting law being a function of at least one position variable and of one reference variable corresponding to said neutral position, said first piloting law generating a first target relating to a first parameter and said second piloting law generating a second target relating to a second parameter that is different from said first parameter, in order to determine said equivalent position:

- the second value of the second parameter to be reached at the time of said control transition is determined, which value is referred to as a "corresponding value", and
- said corresponding value is assigned to said reference variable, said neutral position representing said equivalent position.

10. Method according to claim 7, **characterised in that**, each piloting law being a function of at least one position variable and of one reference variable corresponding to said neutral position, said first piloting law generating a first target relating to a first parameter and said second piloting law generating a second target relating to a second parameter that is different from said first parameter, in order to determine said equivalent position:

- the second value of the second parameter to be reached at the time of said control transition is determined, which value is referred to as a "corresponding value",
- the corresponding value is weighted in order to determine a value weighted by a given weighting factor, the weighted value being equal to the product of the corresponding value and the weighting factor, and
- said equivalent position is determined by assigning said weighted value to said reference value in said second piloting law.

11. Method according to claim 5, **characterised in that**, said pilot control (15) being in a neutral position in the absence of any force being exerted on said pilot control by a person and said first piloting law being a function of at least one position variable and of one reference variable corresponding to said neutral position, said equivalent position is said neutral position.

12. Method according to any of claims 1 to 11, **characterised in that** said target is an order transmitted to said actuator.

13. Method according to any of claims 1 to 11, **characterised in that** said target is transmitted to a piloting unit (40), said piloting unit (40) applying at least one piloting law in order to convert said target into at least one control signal transmitted to an actuator (10).

14. Method according to any of claims 1 to 13, **characterised in that** at least one distance is equal to a difference between said equivalent position and said current position, said corrected value being equal to the sum of said current position of said pilot control and said difference.

15. Method according to any of claims 1 to 13, **characterised in that** at least one distance is equal to a difference between said current position and said equivalent position, said corrected value being equal to the difference between said current position of said pilot control and said difference.

16. Vehicle (1) provided with at least one steering member (2), said vehicle (1) comprising at least one actuator (10) acting on said steering member (2), said vehicle (1) having at least one pilot control (15) for controlling an actuator (10) in order to act on said steering member (2), said vehicle (1) comprising at least one sensor (20) which measures the position of said pilot control (15) in relation to a neutral position (POS0), **characterised in that** said vehicle (1) comprises:

- one processing unit (30) connected to each sensor (20), the processing unit (30) comprising a memory (31) which stores a plurality of piloting laws, each piloting law determining a target to be reached for controlling said actuator (10) as a function of at least one position variable relating to a position of said pilot control (15) in relation to a neutral position, the processing unit (30) comprising a computer (32) for determining said target by performing the method according to any of claims 1 to 15.

17. Vehicle according to claim 16, **characterised in that** said vehicle (1) comprises a piloting unit (40) which is connected to the processing unit (30) and to said actuator (10), the piloting unit (40) comprising a computational sub-assembly for performing the method according to claim 13.

Fig.1

Fig.2

Fig.3

Fig.4

STP 2  STP 1 → 10

STP 3

STP 4  STP 5

Fig.5

DIFF  β1
β2
POSEQUI
POSO
15;16
POSINI

Fig.6

DIFF
β3
POSO;
POSEQUI
POSINI
15;16

Fig.7

DIFF
β4
POSO;
POSEQUI
POSINI
15;16

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 8729848 B
- US 5197697 A
- US 8050780 B
- US 8725321 B
- EP 0718731 A
- US 2013261583 A
- US 2007164167 A